# EUROPEAN PATENT APPLICATION

(11) **EP 2 444 706 A1**
(43) Date of publication of application: **25.04.2012**
(21) Application number: 11185566.4
(22) Date of filing: 18.10.2011
(51) Int. Cl.: F16L 27/073, B05B 15/06, E03C 1/04, E03C 1/06

(54) **Apparatus made up of a flexible tube and a shower head, with an orientable ball-joint connection**

(30) Priority: 21.10.2010 IT BO20100106 U
(71) Applicant: Visentin S.p.A., 28076 Pogno, Privince of Novara (IT)
(72) Inventor: Visentin, Emanuele, I-28076 POGNO, Province of Novara (IT)
(74) Representative: Porsia, Attilio

(57) **Abstract**

Apparatus made up of a flexible tube (T) and a shower head (2), for being held by streamlined devices of any kind, **characterized in that** the threaded attachment (1) usually provided at the distal end of said flexible tube (T) is connected in a leaktight manner to the neck (102) of said shower head (2) with the insertion of ball-joint means (4, 5, 7, 107) and with the insertion of sealing means (6), all so that the distal end of the flexible tube can be held by any suitable support means and the shower head (2) can be oriented in various directions according to the various needs of the user, by virtue of the presence of said ball joint (4, 5, 7, 107) through which there flows the stream of water supplied to said shower head.

## Description

The present invention relates to shower heads connected, by means of a flexible line, to the mixer or individual taps that control the flow of hot and cold water. In the prior art, the flexible tube is connected to the shower head by means of a fixed axial connection, with the insertion of sealing means, and said head is held at the desired height by a static or sliding support means fixed to a wall of the shower cubicle and often having articulation means or a spherical joint to enable the user to adjust the orientation of the shower head and adapt it to his or her needs.

Articulated or ball-joint support devices, when associated with slide devices, can be particularly complicated, both from the structural viewpoint and in terms of use, one reason being because the support means for the shower head are somewhat distant from the slideway, making the whole bulky. Therefore, when the guide/slideway unit includes a magnetic attachment, the length of said arm means that powerful magnets must be used, increasing costs and with all the problems that this entails.

The invention aims to overcome these and other problems of the prior art, with an apparatus like that claimed in the attached claim 1, in which the shower head is connected to the distal end of the flexible tube with the insertion of a spherical joint, substantially as used in fixed showers with orientable shower heads, such as that described in German patent application DE 196 45 458 A1. The invention also includes the possibility of associating such a ball-joint device with a streamlined slide device, with a magnetic attachment.

The features and advantages of the invention will become clear from the following description, given with reference to the figures of the two attached plates of drawings, in which:
- Figure 1 shows the apparatus in question in partial longitudinal section and associated with a slide device with magnetic attachment;
- Figures 2 and 3 are perspective views of the slide device of Figure 1, in the assembled state and separated into the various components thereof, respectively.

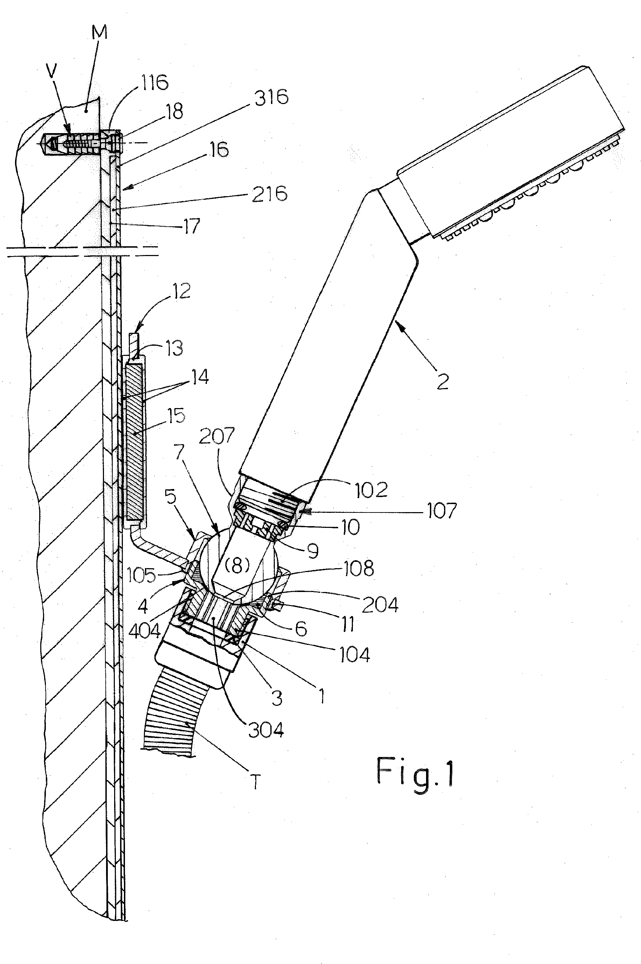

In Figure 1, T denotes the flexible tube, which usually has at the distal end thereof an attachment, for example with a ring 1, internally threaded, which in the prior art is axially fixed in a leaktight manner, by means of a seal 3, to the threaded neck 102 of the shower head 2. According to the invention, however, said ring 1 is fixed in a leaktight manner, with the insertion of said seal 3, to the externally threaded shank 104 of a connector 4, the head 204 of which is externally threaded so as to screw into the internal thread of a ring 5. The shank of the connector 4 includes an axial bore 304 of prismatic section so that it may be easily screwed and unscrewed using a hex key. At least one annular seal 6 (see below) is housed in the hollow head 204, said seal creating a seal with the bottom of the housing seat and with the spherical surface of a ball joint 7 which is pushed against the assembly 4, 6 by said ring 5, part of the ball joint 7 emerging from said ring, namely the part thereof from which there extends radially a shank 107 that is axially hollow and in communication with the diametric cavity 8 of the ball joint, which in turn is in communication with the axial cavity 304 of the connector 4, via the end 108 thereof which is preferably suitably tapered, for the reasons explained below. The axial cavity of the shank 107 of the ball joint is such that it may house an optional insert 9 with the function of flow limiter and/or filter and/or aerator, a seal 10 and, lastly, is such that the neck 102 of the shower head 2 may be screwed therein in a leaktight manner. To facilitate screwing and unscrewing of the neck 102, said shank 107 of the ball joint preferably has, on the outside, at least two parallel, counterposed flat portions 207 so that it can be held using a spanner or other means.

It is clear that the assembly 1, 4 and 5 of the apparatus described may be held at a certain height by any orientable or non-orientable support means and that, on the other hand, the shower head 2 may be oriented in various directions for greater user comfort, thanks to the ability of the ball joint 7 to pivot in a leaktight manner within the assembly 4, 5, 6 without substantially affecting the aperture for the flow of water to the bore 8, by virtue of the fact that the proximal end 108 of said bore is tapered and the bore 304 is flared 404 appropriately, these two features rendering the two opposing spherical portions of the ball joint 7 substantially equal, the external portion emerging from the ring 5 and the internal portion being received in the seal 6. While the external portion pivots in the space allowed by the collar of the ring 5, the internal portion, incorporating the mouth 108 of the bore, pivots in the internal aperture of the seal 6. The latter component 6, unlike as illustrated in figure 1, may be composite, i.e. have a more elastic lower part and a more rigid, more hard-wearing upper part which is in contact with the ball joint 7 and which, by virtue of the elastic lower part, is constantly pressed against the ball joint and is connected in a leaktight manner to the seat that houses said composite seal.

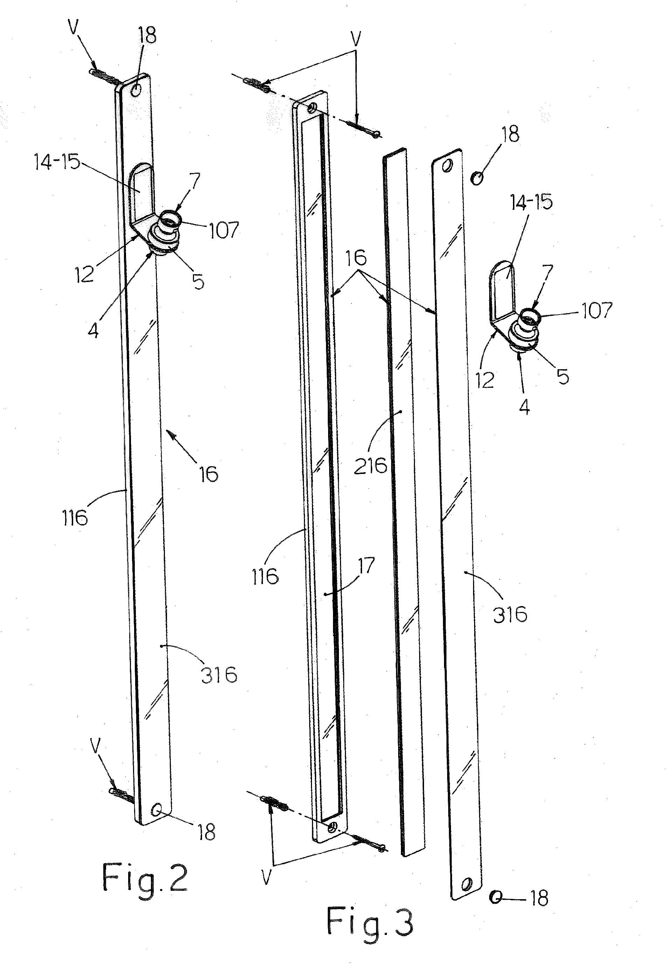

Secondary to the improvement described, the invention aims to protect said improved apparatus in combination with a streamlined slide device with magnetic attachment, as described below with reference also to Figures 2 and 3. It can be seen from Figure 1 that the ring 5 is mounted by friction or otherwise fixed, for example by means of a flange as shown by 105, in the hole 11 in one of the arms of a bracket 12 made for example of stainless steel and having an internal angle of around 120°, while the other arm includes a window 13 in which it is possible to fix a box-like composite element 14, made of a suitable plastic, inside which is placed at least one permanent magnet 15 with the necessary properties. The shower head 2 may easily be gripped by the user, one reason being because the bracket 12 associated therewith is small. Using the magnetic part 15, the bracket 12 may as desired be slidingly fixed at any height along a vertical guide 16 that comprises a base 116 made of plastic that can be fixed to the wall M using wall plugs/screws V, or optionally fixed to a panel of a shower cubicle, or may on the other hand form an integral part of said panel, and that has a recessed housing 17 that receives a ferromagnetic insert 216 which is held in place and protected by a thin sheet 316, for example made of stainless steel or other material that is permeable to magnetism, adhesively bonded in a leaktight manner to the visible face of the base 116. Reference numeral 18 denotes the covers for covering the holes in the base 116 that receive the heads of the wall plugs/screws V.

Obviously, the magnetic bracket 12 may easily be positioned by the user on any part of the guide 16 so that the shower head 2 may be positioned at the desired height, and said bracket may easily be detached from the guide 16 when the user wishers to hold the shower head 2 by hand.

It is understood that the apparatus as described may be subject to any minor modifications and technical equivalents that result in the same benefits and come under the same inventive concept, without for all that departing from the essence of the invention as described and illustrated and as claimed below.

In the claims, the references in parentheses are given purely by way of example and do not limit the scope of protection of said claims.

## Claims

1. Apparatus made up of a flexible tube (T) and a shower head (2), for being held by streamlined devices of any kind, **characterized in that** the threaded attachment (1) usually provided at the distal end of said flexible tube (T) is connected in a leaktight manner to the neck (102) of said shower head (2) with the insertion of hollow ball-joint means (4, 5, 7, 107) and with the insertion of sealing means (6), all so that the distal end of the flexible tube can be held by any suitable support means and the shower head (2) can be oriented in various directions according to the various needs of the user, by virtue of the presence of said ball joint (4, 5, 7, 107) through which there flows the stream of water supplied to the shower.

2. Apparatus according to claim 1 **wherein** said attachment (1) at the distal end of the flexible tube (T) is fixed with the insertion of a seal (3) to the externally threaded shank (104) of a connector (4) with a prismatic axial bore (304), the head (204) of which is threaded externally to enable it to be screwed into the internal thread of a ring (5), said hollow head (204) housing at least one annular seal (6) that creates a seal with the bottom of the housing seat and with the spherical surface of a ball joint (7) which is pushed against said assembly (4, 6) by said ring (5), part of said ball joint (7) emerging from said ring, namely the part thereof from which there extends radially a shank (107) that is axially hollow and in communication with the diametric cavity (8) of said ball joint, which in turn is in communication with the axial cavity (304) of said connector (4) to allow the necessary flow of water to the shower head (2) which, via the neck (102) thereof, is screwed onto said shank (107) of the ball joint with the inclusion of sealing means.

3. Apparatus according to claim 2, **wherein** the axial cavity of the shank (107) of the ball joint (7) is such that it may house an optional insert (9) with the function of flow limiter and/or filter and/or aerator, an optional seal (10) and, lastly, is such that the neck (102) of the shower head (2) may be screwed therein in a leaktight manner, said shank (107) having at least two parallel, counterposed flat portions (207) so that it can be held using a tool during the screwing or unscrewing operation.

4. Apparatus according to one or more of the preceding claims 1 to 3, **wherein** said diametric bore (8) of the ball joint (7) has a proximal end (108) that is suitably tapered and the axial bore (304) of the connector (4) is flared (404) appropriately in the direction of said ball joint (7) so as to render the two spherical portions of said ball joint (7) substantially equal, the external portion emerging from the ring (5) and the internal portion being received in said seal (6), all in such a way that, during adjustment of the orientation of the ball joint, the flow of water through the bore (8, 108) of said ball joint (7) is not substantially affected.

5. Apparatus according to one or more of the preceding claims 1 to 4, **wherein** said seal (6) of the ball joint (7) may be composite, i.e. have a more elastic lower part and a more rigid, more hard-wearing upper part which is in contact with the ball joint (7) and which, by virtue of the elastic lower part, is constantly pressed against said ball joint and is connected in a leaktight manner to the seat of the connector (4) that houses said composite seal.

6. Apparatus according to one or more of the preceding claims 1 to 5, **wherein** said ring (5) is fixed in the hole (11) in one of the arms of a bracket (12) having an internal angle of around 120° for example, while the other arm includes a window (13) in which is fixed a box-like composite element (14), made of a suitable plastic, inside which is placed at least one permanent magnet (15) by virtue of which the bracket (12) may be fixed at any point along a vertical guide (16) that comprises a base (116) made of plastic that can be fixed to the wall (M) using wall plugs/screws (V), or optionally fixed to a panel of a shower cubicle, or may on the other hand form an integral part of said panel, and that has a recessed housing (17) that receives a ferromagnetic insert (216) which is held in place and protected by a thin sheet (316) made of any material that is permeable to magnetism, adhesively bonded in a leaktight manner to the visible face of said base (116).
